# EUROPEAN PATENT APPLICATION

(11) **EP 4 675 337 A1**
(43) Date of publication of application: **07.01.2026**
(21) Application number: 24919138.8
(22) Date of filing: 11.10.2024
(51) Int. Cl.: G02B 27/10, G02B 6/00, G02B 5/18

(54) **SYSTEM FOR MANUFACTURING OPTICAL WAVEGUIDE LENS**

(30) Priority: 08.05.2024 CN 202410557923
(71) Applicant: Nanchang Virtual Reality Research Institute Co., Ltd., Nanchang, Jiangxi 330000 (CN)
(72) Inventor: NI, Mingli, Nanchang, Jiangxi 330000 (CN); YAN, Zhenlin, Nanchang, Jiangxi 330000 (CN); MA, Feng, Nanchang, Jiangxi 330000 (CN); YANG, Junxing, Nanchang, Jiangxi 330000 (CN); LI, Yuan, Nanchang, Jiangxi 330000 (CN); HU, Kunxing, Nanchang, Jiangxi 330000 (CN); HE, Weiming, Nanchang, Jiangxi 330000 (CN)
(74) Representative: Metida
(86) International application number: PCT/CN2024/124067
(87) International publication number: WO 2025/232082

(57) **Abstract**

Embodiments of this application provide a system for preparing an optical waveguide lens. Primarily, multi-beam splitting processing is performed on an exposure beam, and beams in different directions are made to interfere pairwise, thereby meeting multi-grating exposure requirements, enabling one-step formation of an in-coupling grating, a turning grating, and an out-coupling grating, reducing preparation time, and particularly improving production efficiency in large-scale production processes.

## Description

### TECHNICAL FIELD

Embodiments of this application pertain to the field of optical waveguide lens preparation technologies, and particularly relates to a system for preparing an optical waveguide lens.

### BACKGROUND

Existing volume holographic optical waveguide lenses are mainly divided into one-dimensional optical waveguide lenses and two-dimensional optical waveguide lenses. A one-dimensional optical waveguide lens consists of two gratings, and a two-dimensional optical waveguide lens consists of two or three gratings. Typically, during interference exposure, each grating is exposed individually, and ultimately, a complete optical waveguide lens is formed. Gratings exposed at different times may be affected by alignment differences between two beams, vibration of optical platform, two uneven applications of refractive index matching liquid, and variation in exposure time, thereby influencing the quality of the gratings, and affecting the transmission efficiency of optical waveguides and imaging effects of images. Additionally, in production and assembly processes, light output directions of optical waveguides cannot be arbitrarily adjusted, and arrangement positions and sizes of three gratings cannot be arbitrarily adjusted either.

### SUMMARY

To address or mitigate the issues in the prior art.

An embodiment of this application provides a system for preparing an optical waveguide lens, including a first monochromatic light generator, a first light intensity controller, a first half-wave plate, a first beam splitter, a first optical path, and a second optical path; where
the first optical path includes a second half-wave plate, a first beam expander, and a first collimating lens;
the second optical path includes a first reflecting mirror, a second beam expander, and a second collimating lens;
monochromatic light emitted by the first monochromatic light generator is sequentially processed by the first light intensity controller and the first half-wave plate, and then split by the first beam splitter into a first beam and a second beam;
the first beam is sequentially processed by the second half-wave plate, the first beam expander, and the first collimating lens in the first optical path, and then split by a second beam splitter into a third beam and a fourth beam, where the third beam is processed by a second reflecting mirror to obtain a fifth beam, and the fourth beam is processed by a third reflecting mirror to obtain a sixth beam;
the second beam is sequentially processed by the first reflecting mirror, the second beam expander, and the second collimating lens in the second optical path, and then split by a third beam splitter into a seventh beam and an eighth beam, where the seventh beam is sequentially processed by a fourth reflecting mirror and a fifth reflecting mirror to obtain a ninth beam, and the eighth beam is processed by a sixth reflecting mirror to obtain a tenth beam;
the sixth beam and the ninth beam are exposed on a holographic material to form an in-coupling grating, the fifth beam and the ninth beam are exposed on the holographic material to form a turning grating, and the sixth beam and the tenth beam are exposed on the holographic material to form an out-coupling grating, thereby forming a two-dimensional optical waveguide lens; and
a beam limiter is disposed on a side of the holographic material proximate to the first monochromatic light generator.

As a preferred embodiment of this application, the system further includes a second monochromatic light generator, a second light intensity controller, a third half-wave plate, and a fourth beam splitter; where
monochromatic light emitted by the second monochromatic light generator is sequentially processed by the second light intensity controller, the third half-wave plate, and the fourth beam splitter to obtain an eleventh beam and a twelfth beam;
the eleventh beam is sequentially processed by a fourth half-wave plate, a seventh reflecting mirror, and a third beam expander, and then enters a first dichroic mirror, where the first dichroic mirror is disposed between the first beam expander and the first collimating lens; and
the twelfth beam is sequentially processed by an eighth reflecting mirror, a ninth reflecting mirror, and a fourth beam expander, and then enters a second dichroic mirror, where the second dichroic mirror is disposed between the second beam expander and the second collimating lens.

As a preferred embodiment of this application, the system further includes a third monochromatic light generator, a third light intensity controller, a fifth half-wave plate, and a fifth beam splitter; where
a tenth reflecting mirror is disposed between the second half-wave plate and the first beam expander, and a third dichroic mirror is disposed between the first beam expander and the first dichroic mirror;
an eleventh reflecting mirror is disposed between the first reflecting mirror and the second beam expander, and a fourth dichroic mirror is disposed between the second beam expander and the second dichroic mirror;
monochromatic light emitted by the third monochromatic light generator is sequentially processed by the third light intensity controller, the fifth half-wave plate, and the fifth beam splitter to obtain a thirteenth beam and a fourteenth beam;
the thirteenth beam is sequentially processed by a sixth half-wave plate and a fifth beam expander, and then enters the third dichroic mirror; and
the fourteenth beam is sequentially processed by a twelfth reflecting mirror and a sixth beam expander, and then enters the fourth dichroic mirror.

As a preferred embodiment of this application, the system further includes a filter; and
the beams respectively processed by the first beam expander, the second beam expander, the third beam expander, the fourth beam expander, the fifth beam expander, and the sixth beam expander are processed by the filter.

As a preferred embodiment of this application, the system further includes a first prism;
the holographic material is disposed on a side of the first prism farther away from the first monochromatic light generator, and the beam limiter is disposed between the first prism and the holographic material; and
after having their incident light angles adjusted by the first prism, the sixth beam and the ninth beam are exposed on the holographic material to form the in-coupling grating, after having their incident light angles adjusted by the first prism, the fifth beam and the ninth beam are exposed on the holographic material to form the turning grating, and after having their incident light angles adjusted by the first prism, the sixth beam and the tenth beam are exposed on the holographic material to form the out-coupling grating.

As a preferred embodiment of this application, the system further includes a second prism;
the holographic material is disposed between the first prism and the second prism, and the beam limiter is disposed between the first prism and the holographic material; and
after having their incident light angles adjusted by the first prism and/or the second prism, the sixth beam and the ninth beam are exposed on the holographic material to form the in-coupling grating, after having their incident light angles adjusted by the first prism and/or the second prism, the fifth beam and the ninth beam are exposed on the holographic material to form the turning grating, and after having their incident light angles adjusted by the first prism and/or the second prism, the sixth beam and the tenth beam are exposed on the holographic material to form the out-coupling grating.

As a preferred embodiment of this application, a light-blocking plate is disposed on the side of the holographic material proximate to the first monochromatic light generator, and the light-blocking plate blocks the sixth beam and the ninth beam to form a one-dimensional optical waveguide lens.

As compared with the prior art, the embodiments of this application provide the system for preparing an optical waveguide lens. Primarily, multi-beam splitting processing is performed on an exposure beam, and beams in different directions are made to interfere pairwise, thereby meeting multi-grating exposure requirements, enabling one-step formation of an in-coupling grating, a turning grating, and an out-coupling grating, reducing preparation time, and particularly improving production efficiency in large-scale production processes.

### BRIEF DESCRIPTION OF DRAWINGS

The drawings described herein are provided to facilitate a further understanding of this application and form a part of this application. The schematic embodiments of this application and their descriptions are used to explain this application and do not constitute an undue limitation on this application. Some specific embodiments of this application will be described in detail hereinafter with reference to the drawings in an exemplary but non-limiting manner. Identical reference numerals in the drawings denote identical or similar components or parts, and those skilled in the art should understand that these drawings are not necessarily drawn to scale. In the drawings:
FIG. 1 is a schematic structural diagram of a system for preparing an optical waveguide lens provided by Embodiment 1 of this application;
FIG. 2 is a schematic structural diagram of a system for preparing an optical waveguide lens provided by Embodiment 2 of this application;
FIG. 3 is a schematic structural diagram of a system for preparing an optical waveguide lens provided by Embodiment 3 of this application;
FIG. 4 is a schematic structural diagram of a system for preparing an optical waveguide lens provided by Embodiment 4 of this application;
FIG. 5 is another schematic structural diagram of a system for preparing an optical waveguide lens provided by Embodiment 4 of this application;
FIG. 6 is another schematic structural diagram of a system for preparing an optical waveguide lens provided by Embodiment 4 of this application;
FIG. 7 is a schematic structural diagram of a system for preparing an optical waveguide lens provided by Embodiment 5 of this application;
FIG. 8 is another schematic structural diagram of a system for preparing an optical waveguide lens provided by Embodiment 5 of this application;
FIG. 9 is another schematic structural diagram of a system for preparing an optical waveguide lens provided by Embodiment 5 of this application;
FIG. 10 is a schematic structural diagram of a system for preparing an optical waveguide lens provided by Embodiment 6 of this application;
FIG. 11 is another schematic structural diagram of a system for preparing an optical waveguide lens provided by Embodiment 6 of this application;
FIG. 12 is another schematic structural diagram of a system for preparing an optical waveguide lens provided by Embodiment 6 of this application;
FIG. 13 is another schematic structural diagram of a system for preparing an optical waveguide lens provided by Embodiment 6 of this application;
FIG. 14 is another schematic structural diagram of a system for preparing an optical waveguide lens provided by Embodiment 6 of this application;
FIG. 15 is another schematic structural diagram of a system for preparing an optical waveguide lens provided by Embodiment 6 of this application;
FIG. 16 is another schematic structural diagram of a system for preparing an optical waveguide lens provided by Embodiment 6 of this application;
FIG. 17 is another schematic structural diagram of a system for preparing an optical waveguide lens provided by Embodiment 6 of this application; and
FIG. 18 is another schematic structural diagram of a system for preparing an optical waveguide lens provided by Embodiment 6 of this application.

### DESCRIPTION OF EMBODIMENTS

To enable those skilled in the art to better understand the solutions of this application, the technical solutions in the embodiments of this application will be described clearly and completely below with reference to the drawings in the embodiments of this application. It is apparent that the described embodiments are merely a part of the embodiments of this application, rather than all embodiments. Based on the embodiments in this application, all other embodiments obtained by those of ordinary skill in the art without creative efforts shall fall within the scope of protection of this application.

### Embodiment 1

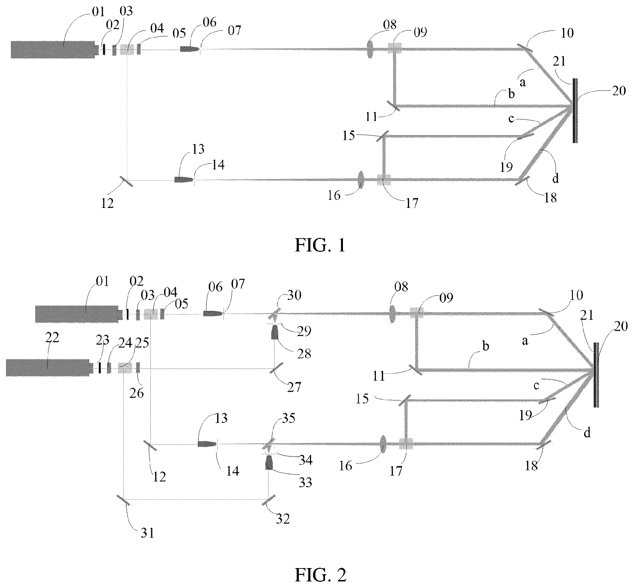

As shown in FIG. 1, an embodiment of this application provides a system for preparing an optical waveguide lens, including a first monochromatic light generator 01, a first light intensity controller 02, a first half-wave plate 03, a first beam splitter 04, a first optical path, and a second optical path.

The first optical path includes a second half-wave plate 05, a first beam expander 06, and a first collimating lens 08.

The second optical path includes a first reflecting mirror 12, a second beam expander 13, and a second collimating lens 16.

Monochromatic light (red, green, or blue light) emitted by the first monochromatic light generator 01 is sequentially processed by the first light intensity controller 02 and the first half-wave plate 03, and then split by the first beam splitter 04 into a first beam and a second beam.

The first beam is sequentially processed by the second half-wave plate 05, the first beam expander 06, and the first collimating lens 08 in the first optical path, and then split by a second beam splitter 09 into a third beam and a fourth beam, where the third beam is processed by a second reflecting mirror 10 to obtain a fifth beam a, and the fourth beam is processed by a third reflecting mirror 11 to obtain a sixth beam b. The first beam expander 06 is configured to focus the beam, and the first collimating lens 08 ensures that light rays propagate parallel to each other.

The second beam is sequentially processed by the first reflecting mirror 12, the second beam expander 13, and the second collimating lens 16 in the second optical path, and then split by a third beam splitter 17 into a seventh beam and an eighth beam, where the seventh beam is sequentially processed by a fourth reflecting mirror 15 and a fifth reflecting mirror 19 to obtain a ninth beam c, and the eighth beam is processed by a sixth reflecting mirror 18 to obtain a tenth beam d. The second beam expander 13 is configured to focus the beam, and the second collimating lens 16 ensures that light rays propagate parallel to each other.

The sixth beam b and the ninth beam c are exposed on a holographic material 20 to form an in-coupling grating, the fifth beam a and the ninth beam c are exposed on the holographic material 20 to form a turning grating, and the sixth beam b and the tenth beam d are exposed on the holographic material 20 to form an out-coupling grating. If the fifth beam a, the sixth beam b, the ninth beam c, and the tenth beam d are all exposed on a front side of the holographic material 20, a transmissive optical waveguide lens shown in FIG. 1 is formed. If the fifth beam a and the sixth beam b are exposed on the front side of the holographic material, and the ninth beam c and the tenth beam d are exposed on a back side of the holographic material 20, a transmissive optical waveguide lens is formed.

In this embodiment of this application, the first monochromatic light generator 01 is a laser, and the laser can emit red, green, or blue light. The first light intensity controller 02 is a shutter, and controlling opening and closing time of the shutter can control the exposure dose of the laser.

Preferably, the system for preparing an optical waveguide lens further includes a first filter 07 and a second filter 14. The beam processed by the first beam expander 06 is filtered by the first filter 07, and the beam processed by the second beam expander 13 is filtered by the second filter 14.

A beam limiter 21 is disposed on a side of the holographic material 20 proximate to the first monochromatic light generator. The beam limiter 21 restricts beams in an optical system to allow only beams for forming a two-dimensional optical waveguide lens to pass through. The beam limiter 21 may be a diaphragm and a photomask.

In the embodiments of this application, three different grating vectors can be exposed at a time to prepare a two-dimensional optical waveguide lens, reducing the time threefold, and the performance of the three prepared gratings can be substantially consistent, eliminating interference from the refractive index matching liquid in multiple interference exposures and avoiding the impact of stray light on an unexposed material portion during single grating exposure. In pilot or large-scale production lines, significant time can be saved, thereby greatly improving the production capacity while ensuring the yield.

In this embodiment of this application, since there is only one first monochromatic light generator 01, only single-color display can be achieved. The first monochromatic light generator 01 can produce a laser of any one of red, green, and blue colors.

### Embodiment 2

As shown in FIG. 2, based on Embodiment 1, the system further includes a second monochromatic light generator 22, a second light intensity controller 23, a third half-wave plate 24, and a fourth beam splitter 25; where
monochromatic light (red, green, or blue light) emitted by the second monochromatic light generator 22 is sequentially processed by the second light intensity controller 23, the third half-wave plate 24, and the fourth beam splitter 25 to obtain an eleventh beam and a twelfth beam;
the eleventh beam is sequentially processed by a fourth half-wave plate 26, a seventh reflecting mirror 27, and a third beam expander 28, and then enters a first dichroic mirror 30, where the first dichroic mirror 30 is disposed between the first beam expander 06 and the first collimating lens 08, and the third beam expander 28 is configured to focus the beam; and
the twelfth beam is sequentially processed by an eighth reflecting mirror 31, a ninth reflecting mirror 32, and a fourth beam expander 33, and then enters a second dichroic mirror 35, where the second dichroic mirror 35 is disposed between the second beam expander 13 and the second collimating lens 16, the first dichroic mirror 30 and the second dichroic mirror 35 are configured to transmit light of certain wavelengths while completely reflecting light of other wavelengths, and the fourth beam expander 33 is configured to focus the beam.

In this embodiment of this application, the second monochromatic light generator 22 is a laser, and the laser can emit red, green, or blue light. The second light intensity controller 23 is a shutter, and controlling opening and closing time of the shutter can control the exposure dose of the laser.

Preferably, the system for preparing an optical waveguide lens further includes a third filter 29 and a fourth filter 34. The beam processed by the third beam expander 28 is filtered by the third filter 29, and the beam processed by the fourth beam expander 33 is filtered by the fourth filter 34.

In this embodiment of this application, since there are the first monochromatic light generator 01 and the second monochromatic light generator 22, two-color display can be achieved. The first monochromatic light generator 01 and the second monochromatic light generator 22 can produce a laser of any one of red, green, and blue colors.

### Embodiment 3

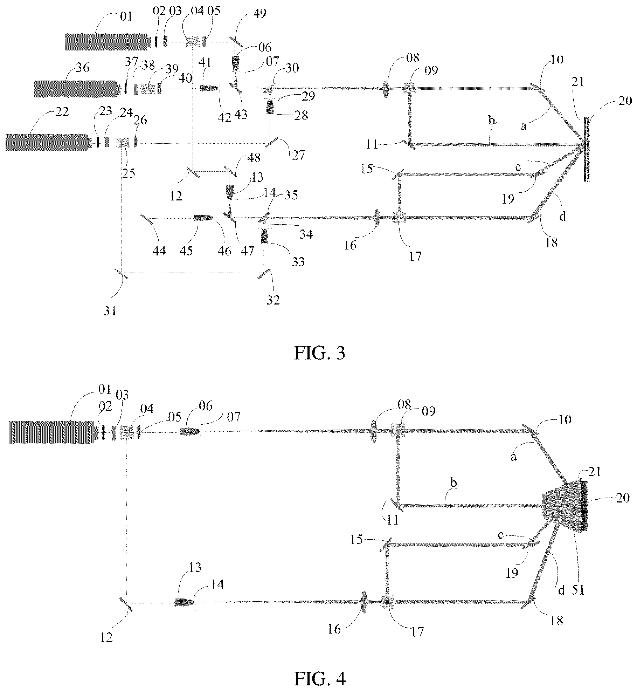

As shown in FIG. 3, based on Embodiment 2, the system further includes a third monochromatic light generator 36, a third light intensity controller 37, a fifth half-wave plate 38, and a fifth beam splitter 39; where
a tenth reflecting mirror 49 is disposed between the second half-wave plate 05 and the first beam expander 06, and a third dichroic mirror 43 is disposed between the first beam expander 06 and the first dichroic mirror 30;
an eleventh reflecting mirror 48 is disposed between the first reflecting mirror 12 and the second beam expander 13, a fourth dichroic mirror 47 is disposed between the second beam expander 13 and the second dichroic mirror 35, and monochromatic light (red, green, or blue light) emitted by the third monochromatic light generator 36 is sequentially processed by the third light intensity controller 37, the fifth half-wave plate 38, and the fifth beam splitter 39 to obtain a thirteenth beam and a fourteenth beam;
the thirteenth beam is sequentially processed by a sixth half-wave plate 40 and a fifth beam expander 41, and then enters the third dichroic mirror 43, where the fifth beam expander 41 is configured to focus the beam; and
the fourteenth beam is sequentially processed by a twelfth reflecting mirror 44 and a sixth beam expander 45, and then enters the fourth dichroic mirror 47, where the sixth beam expander 45 is configured to focus the beam.

In this embodiment of this application, the third monochromatic light generator 36 is a laser, and the laser can emit red, green, or blue light. The third light intensity controller 37 is a shutter, and controlling opening and closing time of the shutter can control the exposure dose of the laser.

The thirteenth beam is sequentially processed by the sixth half-wave plate 40, and then processed by the fifth beam expander 41 to focus the beam, and enters the third dichroic mirror 43; and
the fourteenth beam is sequentially processed by the twelfth reflecting mirror 44 to redirect the optical path, and then processed by the sixth beam expander 45 to focus the beam, and enters the fourth dichroic mirror 47.

Preferably, the system for preparing an optical waveguide lens further includes a fifth filter 42 and a sixth filter 46. The beam processed by the fifth beam expander 41 is filtered by the fifth filter 42, and the beam processed by the sixth beam expander 45 is filtered by the sixth filter 46.

As compared with the prior art, the embodiments of this application provide the system for preparing an optical waveguide lens. Primarily, multi-beam splitting processing is performed on an exposure beam, and beams in different directions are made to interfere pairwise, thereby meeting multi-grating exposure requirements, enabling one-step formation of an in-coupling grating, a turning grating, and an out-coupling grating, reducing preparation time, and particularly improving production efficiency in large-scale production processes.

In the above Embodiment 1, Embodiment 2, and Embodiment 3, the beams may not pass through a prism during interference. Removing the prism allows for large-size optical waveguide grating exposure, reducing optical path costs, and large-size beam expansion can achieve a relatively large exposure area. The holographic material consists of a layer of optical waveguide sandwiched between two layers of glass, and has a beam exposure manner the same as a prism. The sixth beam b and the ninth beam c are exposed on the holographic material to form an in-coupling grating, the fifth beam a and the ninth beam c are exposed on the holographic material to form a turning grating, and the sixth beam b and the tenth beam d are exposed on the holographic material to form an out-coupling grating. The three gratings with different grating vectors can be exposed at a time to prepare a two-dimensional optical waveguide lens. By adjusting incident angles of different beams in setting up the exposure optical path, beams interfere exposure forms three different gratings.

In this embodiment of this application, since there are the first monochromatic light generator 01, the second monochromatic light generator 22, and the third monochromatic light generator 36, full-color display can be achieved. The first monochromatic light generator 01, the second monochromatic light generator 22, and the third monochromatic light generator 36 can produce a laser of any one of red, green, and blue colors.

### Embodiment 4

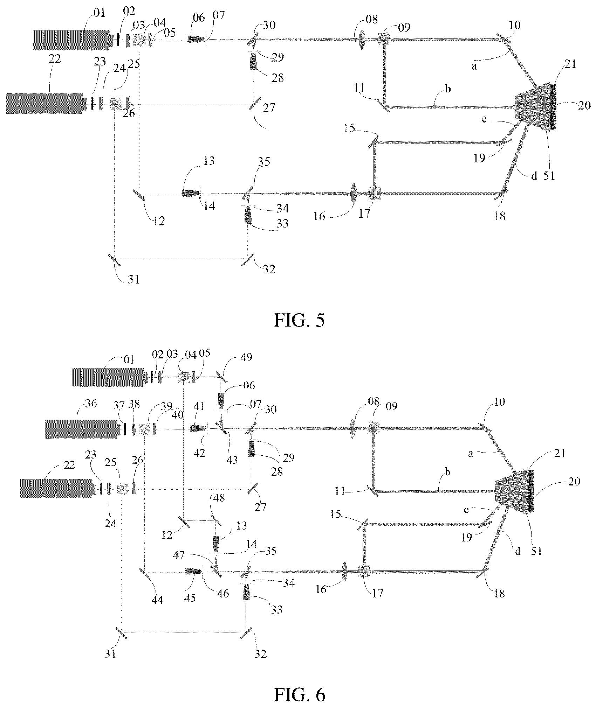

As shown in FIG. 4, FIG. 5, and FIG. 6, the systems provided in Embodiment 1, Embodiment 2, and Embodiment 3 further include a first prism 51.

Specifically, the holographic material 20 is disposed on a side of the first prism 51, and the beam limiter 21 is disposed between the first prism 51 and the holographic material 20. The beam limiter 21 may be a diaphragm or a photomask.

After having their incident light angles adjusted by the first prism 51, the sixth beam b and the ninth beam c are exposed on the holographic material 20 to form an in-coupling grating, after having their incident light angles adjusted by the first prism 51, the fifth beam a and the ninth beam c are exposed on the holographic material 20 to form a turning grating, and after having their incident light angles adjusted by the first prism 51, the sixth beam b and the tenth beam d are exposed on the holographic material 20 to form an out-coupling grating. If the fifth beam a and the sixth beam b are exposed on a front side of the first prism 51, and the ninth beam c and the tenth beam d are exposed on a back side of the holographic material 20, a transmissive optical waveguide lens as shown in FIG. 4, FIG. 5, and FIG. 6 is formed.

In this embodiment, interference exposure is performed by directing the beams from one side of the holographic material 20 to form a reflective volume holographic optical waveguide. In reflective volume holographic optical waveguide exposure, interfering light needs to be incident from one side of the holographic material to form a grating through interference within the holographic material.

### Embodiment 5

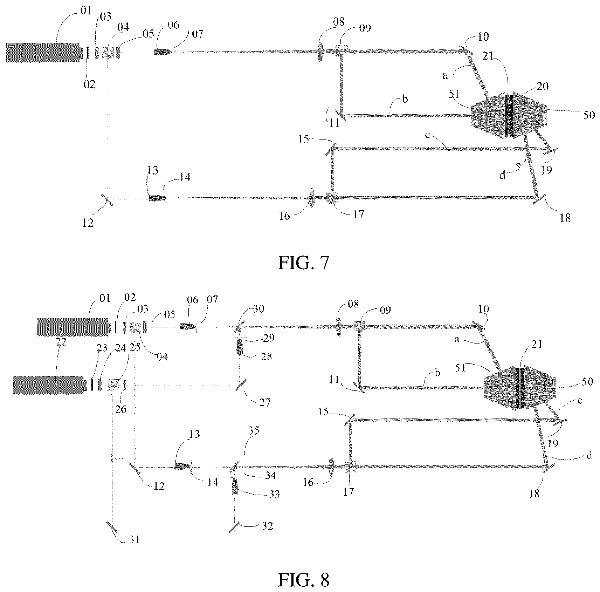

As shown in FIG. 7, FIG. 8, and FIG. 9, based on Embodiment 4, the system further includes a second prism 50.

The holographic material 20 is disposed between the first prism 51 and the second prism 50. The beam limiter 21 is disposed between the first prism 51 and the holographic material 20. The beam limiter 21 may be a diaphragm or a photomask.

After having their incident light angles adjusted by the first prism 51 and the second prism 50, the sixth beam b and the ninth beam c are exposed on the holographic material 20 to form an in-coupling grating, after having their incident light angles adjusted by the first prism 51 and the second prism 50, the fifth beam a and the tenth beam d are exposed on the holographic material 20 to form a turning grating, and after having their incident light angles adjusted by the first prism 51 and the second prism 50, the sixth beam b and the tenth beam d are exposed on the holographic material 20 to form an out-coupling grating. If the fifth beam a and the sixth beam b are exposed on a front side of the first prism 51, and the ninth beam c and the tenth beam d are exposed on a front side of the second prism 50, a transmissive optical waveguide lens is formed.

In this embodiment, interference exposure is performed by directing the beams from two sides of the holographic material 20 to form a reflective volume holographic optical waveguide. In reflective volume holographic optical waveguide exposure, interfering light needs to be incident from two sides of the holographic material 20 to form gratings through interference within the holographic material.

With Embodiment 1 to Embodiment 5, a two-dimensional optical waveguide lens can be prepared.

In this embodiment of this application, in assembling AR devices, a light output manner of one-dimensional and two-dimensional optical waveguides needs to be selected based on the arrangement shape of gratings, the size of an optical engine, and the size of glasses. The exposure manner of the above optical path can adjust the light output manner of the out-coupling grating at any time. An exposure optical path of a transmissive grating is used as an example. When the optical engine needs to output light on the same side as the optical waveguide, as shown in FIG. 1 to FIG. 9, the sixth beam b and the ninth beam c are exposed on the holographic material 20 to form an in-coupling grating, the fifth beam a and the ninth beam c are exposed on the holographic material 20 to form a turning grating, and the sixth beam b and the tenth beam d are exposed on the holographic material 20 to form an out-coupling grating. Conversely, when the optical engine needs to output light on a side opposite to the optical waveguide, the sixth beam b and the ninth beam c are exposed on the holographic material 20 to form an in-coupling grating, the fifth beam a and the ninth beam c are exposed on the holographic material 20 to form a turning grating, and the fifth beam a and the sixth beam b are exposed on the holographic material 20 to form an out-coupling grating.

### Embodiment 6

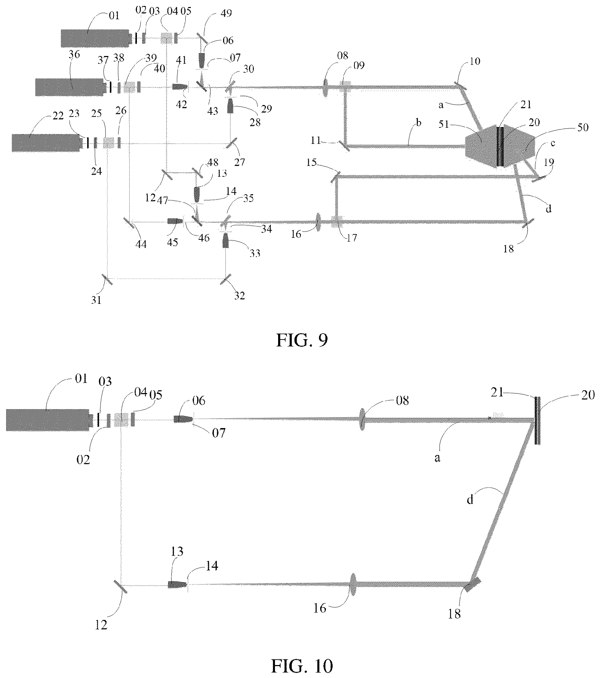

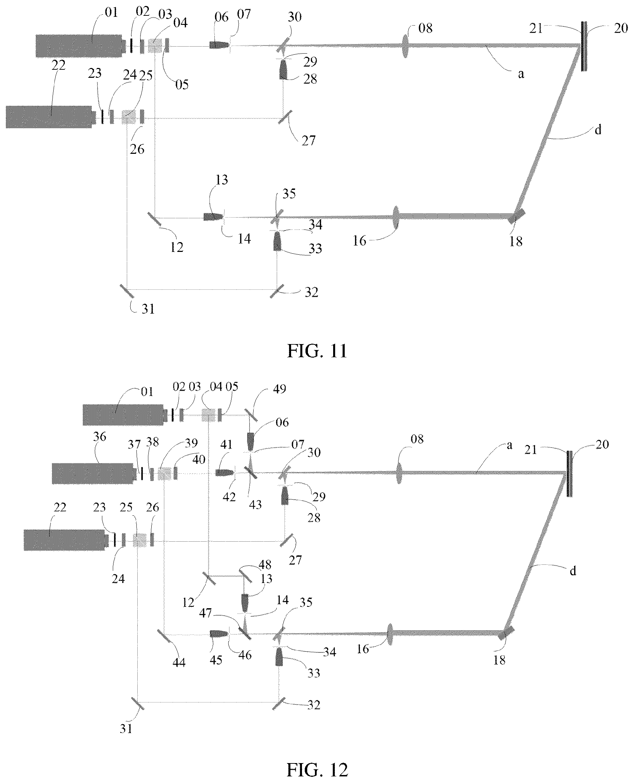

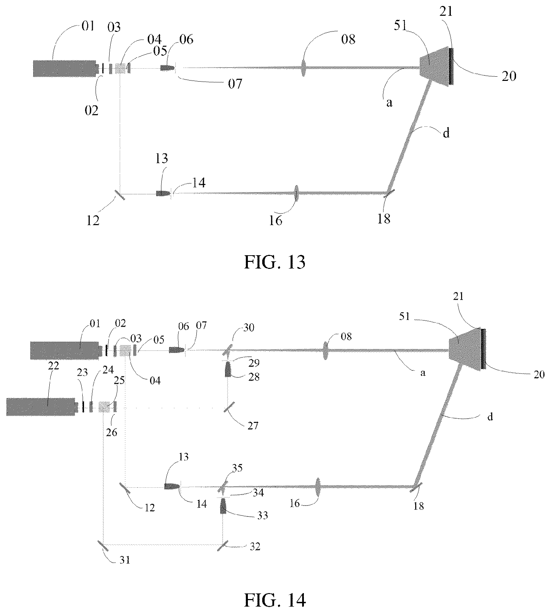

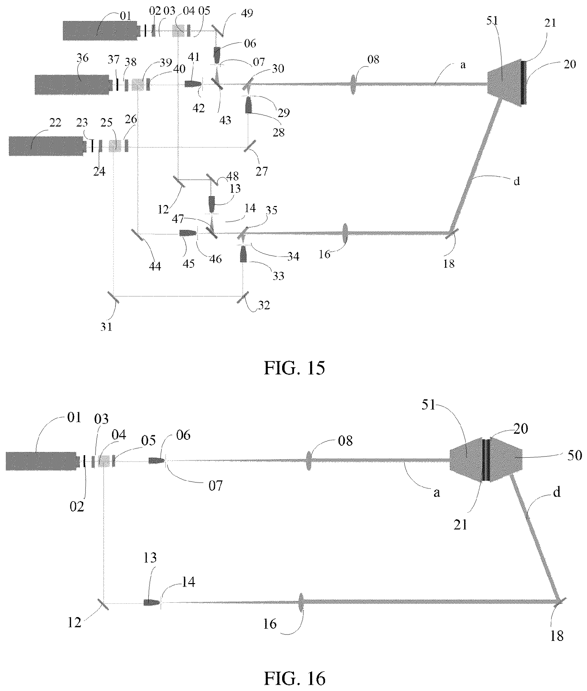

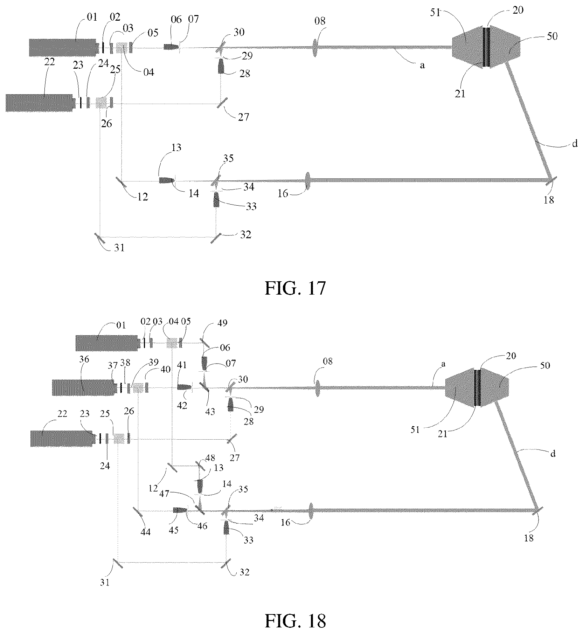

As shown in FIG. 10 to FIG. 18, based on Embodiment 1 to Embodiment 5, a light-blocking plate (not shown) is disposed on a side of the holographic material 20 proximate to the first monochromatic light generator 01, and the light-blocking plate (not shown) blocks the fifth beam a and the tenth beam d to form a one-dimensional optical waveguide lens.

Finally, it should be noted that the above embodiments are only used to illustrate the technical solutions of this application and not to limit them. Although this application has been described in detail with reference to the foregoing embodiments, those of ordinary skill in the art should understand that they can still modify the technical solutions described in the foregoing embodiments or make equivalent substitutions for some or all of the technical features. These modifications or substitutions do not cause the essence of the corresponding technical solutions to depart from the scope of the technical solutions of the embodiments of this application.

## Claims

1. A system for preparing an optical waveguide lens, comprising a first monochromatic light generator, a first light intensity controller, a first half-wave plate, a first beam splitter, a first optical path, and a second optical path; wherein
the first optical path comprises a second half-wave plate, a first beam expander, and a first collimating lens;
the second optical path comprises a first reflecting mirror, a second beam expander, and a second collimating lens;
monochromatic light emitted by the first monochromatic light generator is sequentially processed by the first light intensity controller and the first half-wave plate, and then split by the first beam splitter into a first beam and a second beam;
the first beam is sequentially processed by the second half-wave plate, the first beam expander, and the first collimating lens in the first optical path, and then split by a second beam splitter into a third beam and a fourth beam, wherein the third beam is processed by a second reflecting mirror to obtain a fifth beam, and the fourth beam is processed by a third reflecting mirror to obtain a sixth beam;
the second beam is sequentially processed by the first reflecting mirror, the second beam expander, and the second collimating lens in the second optical path, and then split by a third beam splitter into a seventh beam and an eighth beam, wherein the seventh beam is sequentially processed by a fourth reflecting mirror and a fifth reflecting mirror to obtain a ninth beam, and the eighth beam is processed by a sixth reflecting mirror to obtain a tenth beam;
the sixth beam and the ninth beam are exposed on a holographic material to form an in-coupling grating, the fifth beam and the ninth beam are exposed on the holographic material to form a turning grating, and the sixth beam and the tenth beam are exposed on the holographic material to form an out-coupling grating, thereby forming a two-dimensional optical waveguide lens; and
a beam limiter is disposed on a side of the holographic material proximate to the first monochromatic light generator.

2. The system for preparing an optical waveguide lens according to claim 1, further comprising a second monochromatic light generator, a second light intensity controller, a third half-wave plate, and a fourth beam splitter; wherein
monochromatic light emitted by the second monochromatic light generator is sequentially processed by the second light intensity controller, the third half-wave plate, and the fourth beam splitter to obtain an eleventh beam and a twelfth beam;
the eleventh beam is sequentially processed by a fourth half-wave plate, a seventh reflecting mirror, and a third beam expander, and then enters a first dichroic mirror, wherein the first dichroic mirror is disposed between the first beam expander and the first collimating lens; and
the twelfth beam is sequentially processed by an eighth reflecting mirror, a ninth reflecting mirror, and a fourth beam expander, and then enters a second dichroic mirror, wherein the second dichroic mirror is disposed between the second beam expander and the second collimating lens.

3. The system for preparing an optical waveguide lens according to claim 2, further comprising a third monochromatic light generator, a third light intensity controller, a fifth half-wave plate, and a fifth beam splitter; wherein
a tenth reflecting mirror is disposed between the second half-wave plate and the first beam expander, and a third dichroic mirror is disposed between the first beam expander and the first dichroic mirror;
an eleventh reflecting mirror is disposed between the first reflecting mirror and the second beam expander, and a fourth dichroic mirror is disposed between the second beam expander and the second dichroic mirror;
monochromatic light emitted by the third monochromatic light generator is sequentially processed by the third light intensity controller, the fifth half-wave plate, and the fifth beam splitter to obtain a thirteenth beam and a fourteenth beam;
the thirteenth beam is sequentially processed by a sixth half-wave plate and a fifth beam expander, and then enters the third dichroic mirror; and
the fourteenth beam is sequentially processed by a twelfth reflecting mirror and a sixth beam expander, and then enters the fourth dichroic mirror.

4. The system for preparing an optical waveguide lens according to claim 3, further comprising a filter; wherein
the beams respectively processed by the first beam expander, the second beam expander, the third beam expander, the fourth beam expander, the fifth beam expander, and the sixth beam expander are processed by the filter.

5. The system for preparing an optical waveguide lens according to claim 3, further comprising a first prism; wherein
the holographic material is disposed on a side of the first prism farther away from the first monochromatic light generator, and the beam limiter is disposed between the first prism and the holographic material; and
after having their incident light angles adjusted by the first prism, the sixth beam and the ninth beam are exposed on the holographic material to form the in-coupling grating, after having their incident light angles adjusted by the first prism, the fifth beam and the ninth beam are exposed on the holographic material to form the turning grating, and after having their incident light angles adjusted by the first prism, the sixth beam and the tenth beam are exposed on the holographic material to form the out-coupling grating.

6. The system for preparing an optical waveguide lens according to claim 5, further comprising a second prism; wherein
the holographic material is disposed between the first prism and the second prism, and the beam limiter is disposed between the first prism and the holographic material; and
after having their incident light angles adjusted by the first prism and/or the second prism, the sixth beam and the ninth beam are exposed on the holographic material to form the in-coupling grating, after having their incident light angles adjusted by the first prism and/or the second prism, the fifth beam and the ninth beam are exposed on the holographic material to form the turning grating, and after having their incident light angles adjusted by the first prism and/or the second prism, the sixth beam and the tenth beam are exposed on the holographic material to form the out-coupling grating.

7. The system for preparing an optical waveguide lens according to any one of claims 1 to 6, wherein a light-blocking plate is disposed on the side of the holographic material proximate to the first monochromatic light generator, and the light-blocking plate blocks the sixth beam and the ninth beam to form a one-dimensional optical waveguide lens.
